# EUROPEAN PATENT APPLICATION

(11) **EP 1 285 602 A1**
(43) Date of publication of application: **26.02.2003**
(21) Application number: 02388003.2
(22) Date of filing: 14.01.2002
(51) Int. Cl.: A46B 7/04

(54) **Interdental brush for mounting on handle**

(30) Priority: 10.08.2001 EP 01610084
(71) Applicant: Tandex A/S, 3540 Lynge (DK)
(72) Inventor: Theilvig, Ole, 3540 Lynge (DK)

(57) **Abstract**

The invention is related to an interdental brush for use with a metal or plastic holder.

The said product is unique by being fixed in a plastic part which is designed in such a way that it is integrated in a protective cap.

The cap will cover the outer end of the handle and thereby protect the user from unnecessary scratching in the mouth or elsewhere by use.

Besides being a protective cap, the plastic part also serve as fixture in the handle.

## Description

The use of interdental brushes is well known for cleaning of interspaces between the teeth.

Over the past 30 years, a number of designs have been developed.

The well known designs are all bottle brush types.

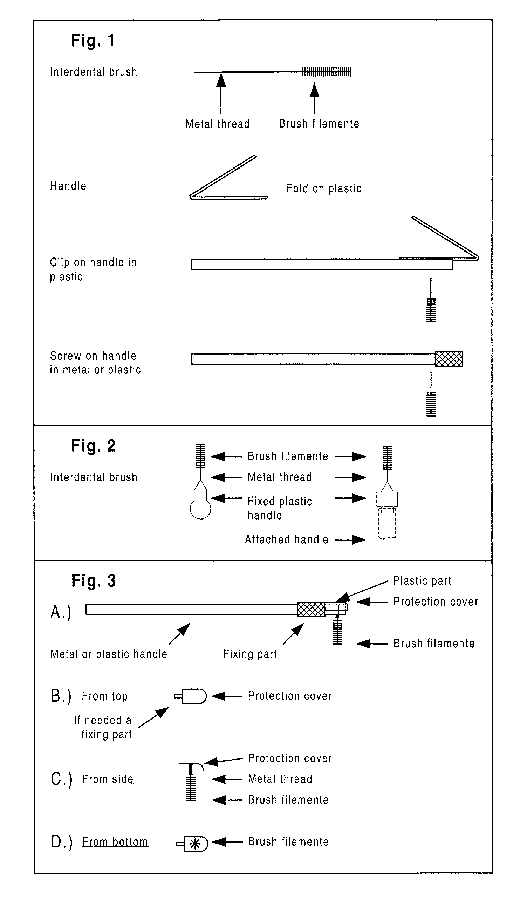

Some are intended to be used with plastic or metal handles to be fixed to the brush (see fig. 1).

The brushes can be from 10 to 80 mm long.

They can be made with uncoated steel wire or with plastic like coated steel wire. The wire diameter varies from 0,20 mm to 0,80 mm before twisting together with the brush filaments.

Other well known types are made with fixed handles, normally in plastic (see fig. 2).

Further, the handles can be extended with a part as shown in fig. 2.

The wire can be coated or uncoated.

The assemble can take place by gluing or melting in the wire part of the brush.

Some interdental brushes with plastic handles are prepared for being used with a metal handle extention.

However, when a metal handle is used all known designs give the risk that the exposed metal parts can irritate or damage the skin or teeth as the outer end with the screw fixing part is exposed.

The invention is such that a metal handle can be used safely together with the interdental brush because:
1. The brush itself is twisted with a coated wire (plastic like coating)
2. The brush is safely inserted in a plastic part and cannot, under normal use, be drawn out from this part.
3. The plastic part is designed in such a way that it covers the outer part of the metal handle.
   This unique design prevents the damages to skin and teeth which are known from the existing products.
4. With the combination of protection cover on both twisted wire and the outer handle part, the product is a unique new invention for interdental brushes to be attached to a handle. Whether the handle is in metal or plastic as it covers the outer end from doing damages.
5. The invention is illustrated in fig. 3 and even though it is displayed on a known metal holder, principle can be understood for use on any similar holder.

## Claims

1. The claim therefore extents to an interdental brush fixed on a plastic part so designed that the plastic part protects against damages to teeth or skin by use when cleaning interdental space.
